# EUROPEAN PATENT SPECIFICATION

(11) **EP 3 235 411 B1**
(45) Date of publication and mention of the grant of the patent: **18.09.2019**
(21) Application number: 17162932.2
(22) Date of filing: 24.03.2017
(51) Int. Cl.: A47J 43/25

(54) **ELECTRIC GRATER**
ELEKTRISCHE REIBE
LIME ÉLECTRIQUE

(30) Priority: 24.03.2016 IT UA201666574 U
(43) Date of publication of application: 25.10.2017
(73) Proprietor: Dimondi S.A.S. Di Ivano Corsini & C., 40037 Sasso Marconi (IT)
(72) Inventor: CORSINI, Ivano, 40037 Sasso Marconi (IT)
(74) Representative: Bergadano, Mirko

(56) References cited:
- US-A- 3 635 270
- US-A- 5 435 237
- US-B1- 6 722 269
- US-B1- 6 766 731

## Description

The present invention relates to an electric grater for grating cheese, vegetables or other food products.

Known electric graters have the common characteristic of a container for inserting small-sized portions of the product to be grated by cutting them from a larger piece of product. Once grated the desired amount of product, the portion of grated product must be removed from the container and placed in a storage area, for example in a refrigerator. Therefore, the storage area often contains several portions of product. Alternatively, the portion of product is completely grated. In both cases, the freshness of the product is compromised. Moreover, flakes of product adhering to the internal walls of the container and difficult to remove remain in the container in which the product is grated.

U.S. Patent No. 6,766,731 B1 discloses a shredding appliance for shredding vegetables or other food articles. The shredding appliance includes a housing having an inlet for introducing the food articles to be shredded, an outlet for outletting the shredded food articles, a rotatable shredding member of hollow construction, an electrical motor for rotating said hollow shredding member, and a transmission coupling said electrical motor to said hollow shredding member. The hollow shredding member has an outer surface aligned with said inlet and formed with shredding elements bordering openings for shredding the inletted food articles and for feeding the shredded food articles into the interior of the hollow shredding member. One end of the hollow shredding member is open and is aligned with the outlet for outletting the shreded food article.

The object of the present invention is to provide an electric cheese grater, which does not require a repeated portioning of a larger piece of product and at the same time is easy and inexpensive to produce and to use.

In accordance with the present invention, it is provided an electric grater according to what is defined in the appended claims.

The present invention will now be described with reference to the accompanying drawings showing a non-limiting embodiment, wherein:
- Figure 1 shows a side view of the grater according to the teaching of the present invention; and
- Figure 2 shows a section view according to the line II-II of a part of the grater of Figure 1.

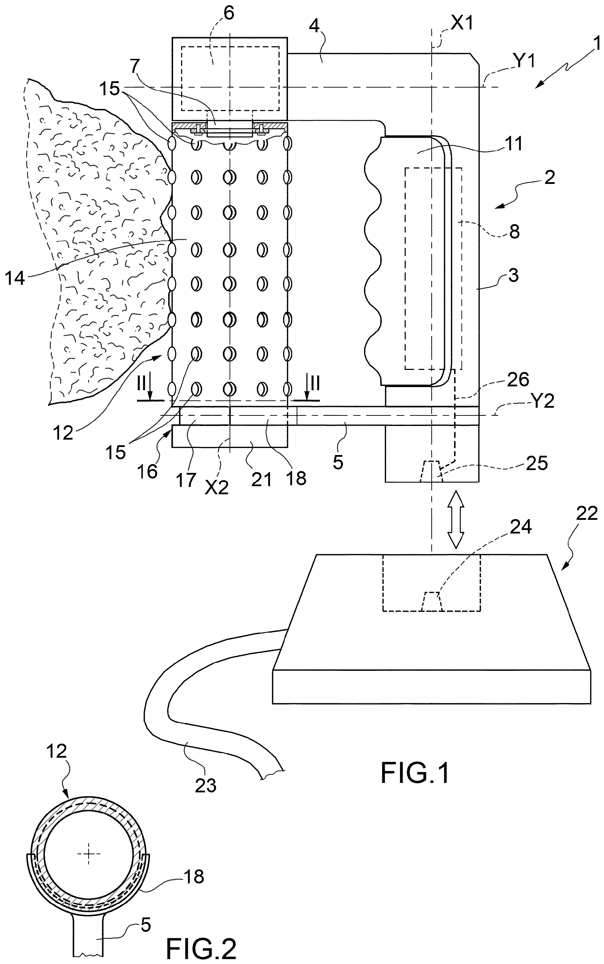

In Figure 1, the reference number 1 generally designates, as a whole, the electric grater of the present invention to be used for grating cheese, vegetables or other food products.

The grater 1 comprises a support body 2 having:
a first portion 3, which extends along a direction X1 and which forms a handle for the user;
a second portion 4, which extends along a direction Y1 perpendicular to the direction X1 from a first axial end of the first portion 3; and
a third portion 5, which extends along a direction Y2 parallel to the direction Y1 from a second axial end of the first portion 3.

The grater 1 comprises:
an electric motor 6 arranged at the free end of the second portion 4 and provided with a drive shaft 7 extending along a direction X2 parallel to the direction X1;
a rechargeable electric battery 8, installed inside said first portion 3;
a button 11, supported by the first portion 3 and providing, if pressed, (in a manner not shown) the electric connection between the battery 8 and the motor 6; and
a hollow cylindrical grating body 12 arranged along the direction X2 between the free ends of the second portion 4 and of the third portion 5.

The grating body 12 comprises:
an upper end 13 keyed (preferably in a removable manner) on the drive shaft 7;
a central portion 14 having on its whole surface extension (preferably evenly distributed) a plurality of annular teeth 15 designed, in use, to grate the product; and
a lower portion 16 having a part 17 inside (Figure 2) a semicircular fork 18 formed at the free end of the third portion 5 and a second part 21 having an outer diameter larger than the outer diameter of the part 17.

As shown in Figure 1, a device 22 to recharge the battery 8 is provided in association with the grater 1. The device 22 has an electric cable 23 (partially shown) to be connected to a power source not shown and a first electric connector 24 mating with a second electric connector 25 arranged at a second axial end of said first portion 3; the second electric connector 25 being connected by means of an electric cable 26 to the battery 8.

In use, it is sufficient to draw a portion of product (for example cheese) near to the central portion 14 of the grating body 12 and press the button 11 for controlling the rotation, by actuating the motor 6, of the grating body 12 around the direction X2 so that the teeth 15 gnaw the product. Then, thanks to the annular conformation of the teeth 15, the grated product enters the grating body 12 through them and leaves it downward through the lower portion 16.

According to what described above and as shown in Figures 1 and 2, it is clear that the embodiment of the present invention can achieve numerous advantages.

In particular, it is provided an electric grater lacking the container not only to avoid the adhesion of the grated product on the walls of the container, but also to recover from the container non-grated portions of product, which then must be stored in a given environment like the refrigerator. Substantially, the grater object of the present invention avoids providing portions of product that must then be grated, because the larger piece of product is directly grated to obtain the desired amount of grated product. It should be noted that the only component in contact with the product is the grating body that after use may be removed from the support body and may be the object of a quick and easy cleaning step. Finally, it should be noted that since the grating body 12 is extractable from the support body 2 it is possible to provide grating bodies 12 with teeth 15 in a different number and with a different shape so as to fit the type of product to be grated and the particle size of the grated product desired by the user. Finally, it is clear that the grater 1 here described and shown may be subject to modifications and variations that do not depart from the scope of the claims.

In particular, for making the grating body 12 removable from the drive shaft 7, one end of the grating body 12 may possibly be snap-fit housed into an end of the drive shaft 7, or vice versa. Then this end of the grating body 12 may possibly be elastically deformable to house the end of the drive shaft 7, or vice versa.

## Claims

1. Electric grater comprising:
a support body (2) having a first portion (3) extending along a first direction (X1) and a second portion (4) extending from said first portion (3) along a second direction (Y1) perpendicular to said first direction (X1);
an electric motor (6) supported by said second portion (4);
a button (11) designed to provide, if pressed, the electric connection to said motor (6); and
an internally hollow cylindrical grating body (12), which is arranged along a third direction (X2) and is cinematically coupled to said motor (6);
and being **characterised in that** said first portion (3) forms a handle for the user, said third direction (X2) is parallel to said first direction (X1) and **in that** it comprises an electric battery (8) installed inside said first portion (3), said button (11) being designed to provide, if pressed, the electric connection between said battery (8) and said motor (6).

2. An electric grater according to claim 1, wherein said grating body (12) comprises:
an upper end (13) cinematically coupled to the drive shaft (7) of said motor (6); and
a central portion (14) having, preferably on its whole surface extension and evenly distributed, a plurality of annular teeth (15) designed, in use, to grate the product.

3. An electric grater according to claim 2, wherein said grating body (12) is removable from a kinematic coupling with said motor (6).

4. An electric grater according to claim 2 and/or 3, wherein said second portion (4) extends from a first axial end of the first portion (3), said supporting body (2) has a third portion (5) extending from a second axial end of said first portion (3) along a fourth direction (Y2) parallel to said second direction (Y1) and said grating body (12) comprises a bottom portion (16) having a part (17) inside a semicircular fork (18) formed at the free end of said third portion (5) and a second part (21) having an outer diameter larger than the outer diameter of said first part (17).

5. An electric grater according to any one of the preceding claims, wherein said battery (8) is rechargeable and is therefore connected to a first electric connector (25) adapted, in turn, to be connected to a second electric connector (24) of a battery charging device (22).

6. An electric grater according to any one of the preceding claims, wherein said button (11) is supported by said first portion (3).

## Patentansprüche

1. Elektrische Reibe mit:
einem Trägerkörper (2) mit einem ersten Abschnitt (3), der sich entlang einer ersten Richtung (X1) erstreckt, und einem zweiten Abschnitt (4), der sich vom ersten Abschnitt (3) entlang einer zweiten Richtung (Y1) senkrecht zur ersten Richtung (X1) erstreckt;
einem Elektromotor (6), der durch den zweiten Abschnitt (4) getragen wird;
einem Knopf (11), der dafür konfiguriert ist, eine elektrische Verbindung zum Motor (6) herzustellen, wenn er gedrückt wird; und
einem innen hohlen zylindrischen Reibenkörper (12), der entlang einer dritten Richtung (X2) angeordnet und mit dem Motor (6) kinematisch verbunden ist;
**dadurch gekennzeichnet, dass**
der erste Abschnitt (3) einen Griff für den Benutzer bildet, die dritte Richtung (X2) sich parallel zur ersten Richtung (X1) erstreckt und die elektrische Reibe eine elektrische Batterie (8) aufweist, die im ersten Abschnitt (3) installiert ist, wobei der Knopf (11) dafür konfiguriert ist, die elektrische Verbindung zwischen der Batterie (8) und dem Motor (6) herzustellen, wenn er gedrückt ist.

2. Elektrische Reibe nach Anspruch 1, wobei der Reibenkörper (12) aufweist:
ein oberes Ende (13), das kinematisch mit der Antriebswelle (7) des Motors (6) verbunden ist; und
einen Mittenabschnitt (14) der, vorzugsweise auf seiner gesamten Oberfläche und gleichmäßig verteilt, mehrere ringförmige Zähne (15) aufweist, die dafür konfiguriert sind, ein Produkt im Gebrauch zu reiben.

3. Elektrische Reibe nach Anspruch 2, wobei der Reibenkörper (12) von einer kinematischen Verbindung mit dem Motor (6) trennbar ist.

4. Elektrische Reibe nach Anspruch 2 und/oder 3, wobei sich der zweite Abschnitt (4) von einem ersten axialen Ende des ersten Abschnitts (3) erstreckt, der Trägerkörper (2) einen dritten Abschnitt (5) aufweist, der sich von einem zweiten axialen Ende des ersten Abschnitts (3) entlang einer vierten Richtung (Y2) parallel zur zweiten Richtung (Y1) erstreckt, und der Reibenkörper (12) einen unteren Abschnitt (16) aufweist, der einen ersten Teil (17) innerhalb einer halbkreisförmigen Gabel (18), die am freien Ende des dritten Abschnitts (5) ausgebildet ist, und einen zweiten Teil (21) mit einem Außendurchmesser aufweist, der größer ist als der Außendurchmesser des ersten Teils (17).

5. Elektrische Reibe nach einem der vorangehenden Ansprüche, wobei die Batterie (8) wiederaufladbar ist und daher mit einem ersten elektrischen Verbinder (25) verbunden ist, der dafür konfiguriert ist, mit einem zweiten elektrischen Verbinder (24) eines Batterieladegeräts (22) verbunden zu werden.

6. Elektrische Reibe nach einem der vorangehenden Ansprüche, wobei der Knopf (11) durch den ersten Abschnitt (3) getragen wird.

## Revendications

1. Râpe électrique comprenant: un corps de support (2) ayant une première partie (3) s'étendant dans une première direction (X1) et une seconde partie (4) s'étendant depuis ladite première partie (3) le long d'une deuxième direction (Y1) perpendiculaire à ladite première direction (X1); un moteur électrique (6) supporté par ladite seconde partie (4); un bouton (11) conçu pour assurer, s'il est enfoncé, la connexion électrique avec ledit moteur ; et un corps de grille cylindrique creux intérieurement (12), qui est disposé le long d'une troisième direction (X2) et est couplé cinématiquement audit moteur (6) ; et étant **caractérisée en ce que** ladite première partie (3) forme une poignée pour l'utilisateur, ladite troisième direction (X2) étant parallèle à ladite première direction (X1), et **en ce qu'**il comprend une batterie électrique (8) installée à l'intérieur de ladite première partie (3); ledit bouton (11) étant conçu pour assurer, s'il est pressé, la connexion électrique entre ladite batterie (8) et ledit moteur (6).

2. Râpe électrique selon la revendication 1, pour laquelle ledit corps de grille (12) comprend :
une extrémité supérieure (13) couplée cinématiquement à l'arbre d'entraînement (7) dudit moteur (6); et
une partie centrale (14) ayant, de préférence sur toute la surface de son extension et répartie de manière uniforme, une pluralité de dents annulaires (15) conçues, en utilisation, pour râper le produit.

3. Râpe électrique selon la revendication 2, pour laquelle ledit corps de grille (12) est amovible par rapport à un couplage cinématique avec ledit moteur (6).

4. Râpe électrique selon la revendication 2 et/ou 3, pour laquelle ladite seconde partie (4) s'étend depuis la première extrémité axiale de ladite première partie (3), ledit corps de support (2) ayant une troisième partie (5) s'étendant depuis une quatrième direction (Y2) parallèle à ladite deuxième direction (Y1) et ledit corps de grille (12) comprend une partie inférieure (16) comportant une partie (17) à l'intérieur d'une fourche semi-circulaire (18) formée à l'extrémité libre de ladite troisième partie (5) et une deuxième partie (21) ayant un diamètre extérieur supérieur au diamètre extérieur de ladite première partie (17).

5. Râpe électrique selon l'une quelconque des revendications précédentes, pour laquelle ladite batterie (8) est rechargeable et est donc connectée à un premier connecteur électrique (25) adapté, à son tour, à être connecté à un second connecteur électrique (24) d'un chargeur de batterie (22).

6. Râpe électrique selon l'une quelconque des revendications précédentes, pour laquelle ledit bouton (11) est supporté par ladite première partie (3).
